# EUROPEAN PATENT APPLICATION

(11) **EP 2 703 995 A1**
(43) Date of publication of application: **05.03.2014**
(21) Application number: 13181719.9
(22) Date of filing: 26.08.2013
(51) Int. Cl.: G06F 3/06, G06F 12/02, G06F 12/08

(54) **Fast execution of flush commands using adaptive compaction ratio**

(30) Priority: 27.08.2012 US 201213595806
(71) Applicant: APPLE INC., Cupertino, CA 95014 (US)
(72) Inventor: Meir, Avraham Poza, Cupertino, CA, 95014 (US); Ben-Yehuda, Guy, Cupertino, CA, 95014 (US); Golov, Oren, Cupertino, 95014 (US); Isachar, Ori, Cupertino, 95014 (US); Guy, Roman, Cupertino, 95014 (US); Schwartz, Yair, Cupertino, 95014 (US)
(74) Representative: Lang, Johannes

(57) **Abstract**

A method includes receiving one or more storage commands and at least one flush command in a storage device, which includes a non-volatile memory and a volatile buffer for buffering data received for storage in the non-volatile memory. The flush command instructs the storage device to commit the data buffered in the volatile buffer to the non-volatile memory. The storage commands are executed in accordance with a first storage rule. The flush command is executed in accordance with a second storage rule having smaller latency relative to the first storage rule.

## Description

### FIELD OF THE INVENTION

The present invention relates generally to memory devices, and particularly to methods and systems for fast execution of flush commands.

### BACKGROUND OF THE INVENTION

Some non-volatile memory systems comprise a volatile buffer for temporarily buffering data that is pending for storage in non-volatile memory. Some storage protocols support a flush command, which instructs a storage device to transfer any data in volatile memory to the non-volatile memory.

Flush commands are supported, for example, in the NVM Express protocol. Flush commands in NVM Express are specified, for example, in "NVM Express," revision 1.0b, July 12, 2011, section 6.7, which is incorporated herein by reference. The Serial ATA (SATA) protocol also specifies flush commands called "FLUSH CACHE" and "FLUSH CACHE EXT". The Small Computer System Interface (SCSI) protocol specifies a flush command called "SYNCHRONIZE CACHE".

### SUMMARY OF THE INVENTION

An embodiment of the present invention that is described herein provides a method in a storage device, which includes a non-volatile memory and a volatile buffer for buffering data received for storage in the non-volatile memory. The method includes receiving in the storage device one or more storage commands and at least one flush command. The flush command instructs the storage device to commit the data buffered in the volatile buffer to the non-volatile memory. The storage commands are executed in accordance with a first storage rule. The flush command is executed in accordance with a second storage rule having smaller latency relative to the first storage rule.

In some embodiments, executing the flush command in accordance with the second storage rule includes limiting a number of programming operations to be performed in the non-volatile memory per each compaction operation to a predefined ratio, and executing the storage commands in accordance with the first storage rule includes permitting the number to exceed the predefined ratio.

Executing the storage commands in accordance with the first storage rule may include enforcing an alternative ratio, which is larger than the predefined ratio. In an embodiment, limiting the number of programming operations per compaction operation includes modifying the predefined ratio depending on a count of free memory blocks that are available in the non-volatile memory.

In some embodiments, the method includes assigning one or more memory blocks in the non-volatile memory exclusively for expediting the flush command, and executing the flush command includes committing the data buffered in the volatile buffer to the exclusively-assigned memory blocks, and subsequently transferring the committed data from the exclusively-assigned memory blocks to alternative storage locations in the non-volatile memory. In an embodiment, committing the data to the exclusively-assigned memory blocks includes storing the data in the exclusively-assigned memory blocks using a low-latency storage configuration.

There is additionally provided, in accordance with an embodiment of the present invention, a storage device including a non-volatile memory, a volatile buffer for buffering data received for storage in the non-volatile memory, and a processor. The processor is configured to receive one or more storage commands and at least one flush command, which instructs the storage device to commit the data buffered in the volatile buffer to the non-volatile memory, to execute the storage commands in accordance with a first storage rule, and to execute the flush command in accordance with a second storage rule having smaller latency relative to the first storage rule.

There is also provided, in accordance with an embodiment of the present invention, a memory controller including an interface and a processor. The interface is configured for communicating with a non-volatile memory. The processor is configured to buffer data received for storage in the non-volatile memory in a volatile buffer, to receive one or more storage commands and at least one flush command, which instructs the memory controller to commit the data buffered in the volatile buffer to the non-volatile memory, to execute the storage commands in accordance with a first storage rule, and to execute the flush command in accordance with a second storage rule having smaller latency relative to the first storage rule.

There is further provided, in accordance with an embodiment of the present invention, a system including a host and a storage device. The storage device includes a non-volatile memory, a volatile buffer for buffering data received from the host for storage in the non-volatile memory, and a processor. The processor is configured to receive from the host one or more storage commands and at least one flush command, which instructs the storage device to commit the data buffered in the volatile buffer to the non-volatile memory, to execute the storage commands in accordance with a first storage rule, and to execute the flush command in accordance with a second storage rule having smaller latency relative to the first storage rule.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a memory system, in accordance with an embodiment of the present invention; and
Fig. 2 is a flow chart that schematically illustrates a method for fast execution of flush commands, in accordance with an embodiment of the present invention.

### DETAILED DESCRIPTION OF EMBODIMENTS

### OVERVIEW

Some non-volatile memory systems comprise a volatile buffer for temporarily buffering data that is pending for storage in non-volatile memory. Some Solid State Drives (SSDs), for example, receive data from a host, initially buffer the data in a volatile buffer, and later transfer the data to the non-volatile memory. The SSD typically sends an acknowledgement to the host as soon as the data is stored in the volatile buffer, often before the data is successfully committed to the non-volatile memory.

Buffering of this sort increases storage performance considerably. On the other hand, if electrical power is disrupted, data that is buffered but not yet committed to the non-volatile memory may be lost even though successful storage was already acknowledged to the host. Such a scenario may cause data inconsistency and should therefore be prevented.

In order to prevent these and other scenarios, some storage protocols support a flush command, which instructs the storage device to commit all buffered data to the non-volatile memory. The storage device acknowledges the flush command only when all the data in the volatile buffer has been transferred successfully to the non-volatile memory. The flush command is typically a blocking command, i.e., the host operating system and file system do not send new write commands until the flush operation is completed. Therefore, executing a flush command may halt the storage device for a long period of time.

Embodiments of the present invention that are described herein provide improved methods and systems for implementing flush commands in non-volatile memory systems such as SSD. In the disclosed embodiments, a processor in the storage device manages the execution of commands accepted from the host. In particular, the processor applies a certain storage rule when executing storage commands, and another storage rule, having smaller latency, when executing flush commands. As a result, the blocking time caused by flush commands is reduced.

In an example embodiment, during execution of flush commands, the processor performs fewer compaction operations per programming operation than during storage commands. A compaction operation, also known as "garbage collection," copies valid data from partially-valid memory blocks of the non-volatile memory into new memory blocks, so as to free contiguous memory space for new storage. By temporarily limiting the number of compaction operations during flush command execution, the processor is able to increase the rate at which the data is transferred from the volatile memory to the non-volatile memory. The blocking time caused by the flush command is thus reduced.

In some embodiments, the processor enforces a variable programming-compaction ratio when executing storage commands. The ratio varies as a function of the number of free memory blocks remaining in the non-volatile memory, in accordance with a certain rule. When executing flush commands, the processor switches to an alternative rule that enforces higher programming-compaction ratios.

In some embodiments, the processor assigns a pool of free memory blocks in the non-volatile memory, exclusively for storing the data transferred from the volatile buffer during flush commands. By using this pool, flush commands can be executed with higher speed, and their blocking time can be further reduced.

### SYSTEM DESCRIPTION

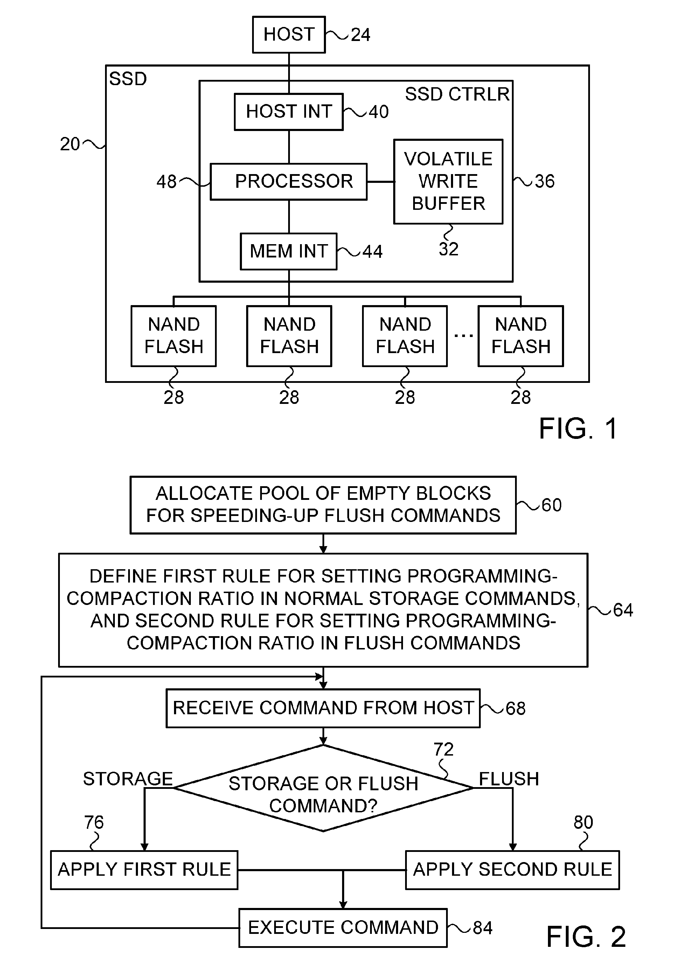

Fig. 1 is a block diagram that schematically illustrates a memory system, in the present example a Solid State Drive (SSD) 20, in accordance with an embodiment of the present invention. SSD 20 stores data on behalf of a host 24. For example, SSD 20 may be installed in a mobile or personal computer, in which case host 24 comprises a Central Processing Unit (CPU) chipset of the computer. Alternatively, SSD 20 may be used with any other suitable host. Although the embodiments described herein refer mainly to SSD, the disclosed techniques can be used with various other kinds of memory systems, such as enterprise storage devices, mobile phones, digital cameras, mobile computing devices such as laptop computers, tablet computers or Personal Digital Assistants (PDAs), media players, removable memory cards or devices, or any other suitable data storage system.

SSD 20 stores data on behalf of host 24 in a non-volatile memory, in the present example in one or more NAND Flash memory devices 28. In alternative embodiments, the non-volatile memory in SSD 20 may comprise any other suitable type of non-volatile memory, such as, for example, NOR Flash, Charge Trap Flash (CTF), Phase Change RAM (PRAM), Magnetoresistive RAM (MRAM) or Ferroelectric RAM (FeRAM).

An SSD controller 36 performs the various storage and management tasks of the SSD, and in particular executes flush commands using methods that are described below. The SSD controller is also referred to generally as a memory controller. SSD controller 36 comprises a host interface 40 for communicating with host 24, a memory interface 44 for communicating with Flash devices 28, and a processor 48 that carries out the methods described herein.

SSD 20 further comprises a volatile write buffer 32, for temporarily buffering data that is received for storage from host 24. Typically, incoming data is initially stored in buffer 32 and later copied to its designated storage location in non-volatile memory devices 28. The copying operation is typically implemented using Direct Memory Access (DMA), but could also be performed by processor 48.

In the present example, buffer 32 is implemented in Random Access Memory (RAM), possibly in a RAM device that is used by processor 48 for additional purposes as well. In the embodiment of Fig. 1, The RAM holding buffer 32 is shown as part of SSD controller 36, although the RAM may alternatively be separate from the SSD controller. In various embodiments, the volatile memory holding buffer 32 may comprise any suitable type of volatile memory, such as, for example, Dynamic RAM (DRAM), Double Data Rate DRAM (DDR DRAM) or Static RAM (SRAM).

SSD controller 36, and in particular processor 48, may be implemented in hardware. Alternatively, the SSD controller may comprise a microprocessor that runs suitable software, or a combination of hardware and software elements.

The configuration of Fig. 1 is an exemplary configuration, which is shown purely for the sake of conceptual clarity. Any other suitable SSD or other memory system configuration can also be used. Elements that are not necessary for understanding the principles of the present invention, such as various interfaces, addressing circuits, timing and sequencing circuits and debugging circuits, have been omitted from the figure for clarity. In some applications, e.g., non-SSD applications, the functions of SSD controller 36 are carried out by a suitable memory controller.

In the exemplary system configuration shown in Fig. 1, memory devices 28 and SSD controller 48 are implemented as separate Integrated Circuits (ICs). In alternative embodiments, however, the memory devices and the SSD controller may be integrated on separate semiconductor dies in a single Multi-Chip Package (MCP) or System on Chip (SoC), and may be interconnected by an internal bus. Further alternatively, some or all of the SSD controller circuitry may reside on the same die on which one or more of memory devices 28 are disposed. Further alternatively, some or all of the functionality of SSD controller 36 can be implemented in software and carried out by a processor or other element of host 24. In some embodiments, host 24 and SSD controller 36 may be fabricated on the same die, or on separate dies in the same device package.

In some embodiments, SSD controller 36 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### FAST EXECUTION OF FLUSH COMMANDS

In some embodiments, processor 48 of SSD 20 achieves high write performance by first storing incoming data in volatile buffer 32, and later transferring the buffered data to non-volatile memory devices 28. This sort of volatile buffering, however, may cause data inconsistency in case of power interruption.

Consider, for example, a scenario in which the electrical power supply of SSD 24 is disrupted while some of the data in buffer 32 has not yet been transferred successfully to non-volatile memory devices 28. On one hand, this data will typically be lost. On the other hand, processor 48 has already acknowledged to host 24 that the data storage was successful. As a result, data inconsistency or lack of synchronization may develop at the host: The host may regard the data as successfully-stored, when in fact the data has been lost.

In order to prevent such scenarios, the storage protocol between host 24 and SSD 20 comprises a flush command. The flush command is issued by the host, and instructs processor 48 in SSD 20 to transfer all the data in volatile buffer 32 to non-volatile memory devices 28. Processor 48 acknowledges the flush command only when all the data in buffer 32 has been transferred and committed successfully to the non-volatile memory.

The flush command is typically a blocking command, i.e., new write commands will not be sent to processor 48 until the flushing operation is completed. Therefore, executing a flush command may halt the storage device for a long period of time, sometimes on the order of several seconds. The duration of the flush command may depend, for example, on the amount of buffered data and on the free memory space in memory devices 28.

In some embodiments, processor 48 reduces the blocking time caused by flush commands by applying storage rules or modes having reduced latency during flush command execution. The embodiments described herein refer mainly to limiting the number of compaction operations during flush command execution. In alternative embodiments, however, processor 48 may apply any other suitable rules or modes that cause flush command execution to have smaller latency than storage command execution. In the description that follows, the term "storage command" refers to any command that is received from the host and is not a flush command, e.g., a write command or a read command. The term "host command" refers to any command that is received from the host for execution in the SSD, including both storage commands and flush commands.

In a typical Flash memory, data is written to memory devices 28 in page units, but erasure is applied to entire memory blocks. Data is written only to erased pages, and it is therefore not possible to update data in-place. Updating data involves writing the updated data to another physical storage location in the Flash memory, marking the previous version of the data as invalid, and dynamically updating the logical-to-physical address mapping that translates the logical addresses of the data into the physical storage locations where the data is stored.

Because of these characteristics of Flash memory, the memory blocks of memory devices 28 gradually accumulate invalid data pages, whose updated versions have been stored in other physical storage locations. In order to reduce the number of invalid pages, processor 48 of SSD controller 36 carries out a compaction, or "garbage collection" process. This background process selects one or more memory blocks (referred to as source blocks) for compaction, copies the valid data from the selected source blocks to other storage locations in one or more other blocks (referred to as target blocks), and then erases the source blocks. The erased blocks are then ready for subsequent programming. The compaction process ensures that, at any given time, a predefined number of memory blocks are erased and available for new programming. These memory blocks are referred to herein as free blocks.

As can be appreciated, the compaction process involves a large number of copy operations that may come at the expense of programming operations that write new data arriving from the host. In other words, copy operations of the compaction process and programming operations of new data compete for the same processing resources in the SSD.

In some embodiments, processor 48 regulates the rates of programming and compaction operations in order to maintain the desired number of free blocks. In an example embodiment, when the number of free blocks falls below a predefined threshold, processor 48 halts any new programming operations, and executes only compaction operations. Since compaction operations increase the number of free blocks, the number of free blocks soon exceeds the predefined threshold, and processor 48 allows new programming operations to proceed.

More generally, processor 48 may use two or more predefined thresholds that define ranges of numbers of free memory blocks. In each range, processor 48 limits the number of programming operations per compaction operation to a certain programming-compaction ratio. (The term "programming-compaction ratio" typically refers to programming and copying of comparable data sizes. For example, the ratio may be defined as:

### Number of pages of new data programme Number of pages copied by the compaction process

Typically, as the number of free blocks decreases, processor 48 allows fewer programming operations per compaction operation, and *vice versa.* The following table gives an example configuration of five ranges (four thresholds) and corresponding programming-compaction ratios:

**Table 1: Example programming-compaction ratios**

| Range index | Number of free blocks (N) | Programming-compaction operation ratio |
|---|---|---|
| I - Program only | N>20 | Programming only |
| II | 15<N≤20 | 3:1 |
| III | 10<N≤15 | 1:1 |
| IV | 5<N≤10 | 1:3 |
| V - Compact only | N≤5 | Compaction only |

In the configuration of Table 1, processor stops all new programming and allows only compaction when the number of free blocks (N) is five or lower. At the other extreme, when the number of free blocks exceeds twenty, processor 48 stops compaction and performs only programming. In intermediate values of N, processor 48 applies intermediate programming-compaction ratios.

Consider an example scenario in which processor 48 uses the configuration of Table 1, and performs a number of random (i.e., non-sequential) write commands. When the number of free blocks falls below the lowest threshold, a flush command is issued by host 24. At this point, processor 48 does not permit new storage commands, and the data in buffer 32 cannot be committed to memory devices 28 until the number of free blocks rises above the "compact only" threshold. In this scenario, the host will typically have to wait for a long time period for the compaction process to end. Only then, the flush command will actually transfer the buffered data to the non-volatile memory and then acknowledge. The disclosed techniques overcome this and other problematic scenarios.

In some embodiments, for a given number of free blocks, processor 48 enforces a smaller programming-compaction ratio when executing storage commands, and a larger programming-compaction ratio when executing flush commands. By allowing more programming operations per compaction operation during flush command execution, the processor is able to transfer the buffered data from buffer 32 to Flash devices 28 with high speed. As a result, the blocking time of the flush command is reduced considerably.

Without this mechanism, the blocking time may reach an order of 500mS, and in some cases up to several seconds. When using the disclosed mechanism, the blocking time can be reduced to an order of 10mS. These figures are given purely by way of example, and various other blocking times can be achieved in alternative embodiments.

In some embodiments, during storage command execution, processor 48 limits the number of programming operations per compaction operation to a certain ratio, but allows the ratio to be exceeded during flush command execution. In some embodiments, during flush command execution, processor 48 enforces a larger programming compaction ratio than the ratio used during storage command execution.

When using multiple thresholds such as in Table 1 above, processor 48 may enforce two different configurations - One configuration during storage command execution and the other during flush command execution. For a given number of free memory blocks, the programming-compaction ratio applied during flush command execution is larger than the ratio applied during storage command execution.

In an example embodiment, processor 48 enforces the configuration of Table 1 above during storage command execution, and Table 2 below during flush command execution:

**Table 2: Example programming-compaction ratios during flush command execution**

| Range index | Number of free blocks (N) | Programming-compaction operation ratio |
|---|---|---|
| I | N>20 | Programming only |
| II | 15<N≤20 | Programming only |
| III | 10<N≤15 | Programming only |
| IV | 5<N≤10 | Programming only |
| V | 2<N≤5 | Programming only |
| VI- Compact only | N≤2 | Compaction only |

The example of Table 2 assumes that the size of write buffer 32 is smaller than three memory blocks. When the flush command is completed and acknowledged, processor 48 reverts back to Table 1 above for subsequent storage commands. The configurations of Tables 1 and 2 above are shown purely by way of example. In alternative embodiments, any other suitable configuration of programming-compaction ratios can be used.

In some embodiments, processor 48 assigns a pool of one or more free memory blocks in non-volatile memory devices 28, exclusively for storing the data transferred from buffer 32 during flush commands. When executing a flush command, processor 48 copies the data from buffer 32 to these exclusively-assigned blocks. The processor may later transfer the data from the exclusively-assigned blocks to alternative storage locations in devices 28, so that the pool of blocks is again available for the next flush command. This mechanism increases the speed of flush command execution.

In some embodiments, processor 48 further speeds-up flush command execution by storing the data in the exclusively-assigned blocks using a low-latency storage configuration. For example, the processor may store normal data using a Multi-Level Cell (MLC) configuration, i.e., at a storage density of multiple bits per memory cell. When transferring data from buffer 32 to the pool of exclusively-assigned blocks, however, the processor may store the data using a Single-Level Cell (SLC) configuration, i.e., at a storage density of one bit per memory cell.

Since SLC storage is considerably faster than MLC storage, this technique reduced the execution time of the flush command considerably. Typically, processor 48 later transfers the data from the pool of blocks to alternative storage locations, and stored the data using MLC.

Fig. 2 is a flow chart that schematically illustrates a method for fast execution of flush commands, in accordance with an embodiment of the present invention. The method begins with processor 48 of SSD controller 36 assigning a pool of empty memory blocks in non-volatile memory devices 28 for use during flush commands, at a pool assignment step 60.

At a rule definition step 64, processor 48 defines first and second storage rules, to be applied during storage command execution and during flush command execution, respectively. The first rule specifies one or more programming-compaction ratios to be used during storage command execution (e.g., Table 1 above). The second rule specifies one or more programming-compaction ratios to be used during flush command execution (e.g., Table 2 above). For a given number of free memory blocks, the programming-compaction ratio specified by the second rule is larger than the programming-compaction ratio specified by the first rule.

Processor 48 receives a command from host 24 for execution in the SSD, at a command input step 68. Processor 48 checks whether the command comprises a storage command or a flush command, at a checking step 72. If the command comprises a storage command, processor 48 applies the first storage rule, at a first rule application step 76. If the command comprises a flush command, processor 48 applies the second storage rule, at a second rule application step 80.

Processor 48 executes the received command in accordance with the applicable first or second rule, at an execution step 84. The method then loops back to step 68 above for processing the next host command.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method, comprising:
in a storage device, which includes a non-volatile memory and a volatile buffer for buffering data received for storage in the non-volatile memory, receiving one or more storage commands and at least one flush command, which instructs the storage device to commit the data buffered in the volatile buffer to the non-volatile memory;
executing the storage commands in accordance with a first storage rule; and
executing the flush command in accordance with a second storage rule having smaller latency relative to the first storage rule.

2. The method according to claim 1, wherein executing the flush command in accordance with the second storage rule comprises limiting a number of programming operations to be performed in the non-volatile memory per each compaction operation to a predefined ratio, and wherein executing the storage commands in accordance with the first storage rule comprises permitting the number to exceed the predefined ratio.

3. The method according to claim 2, wherein executing the storage commands in accordance with the first storage rule comprises enforcing an alternative ratio, which is larger than the predefined ratio.

4. The method according to claim 2, wherein limiting the number of programming operations per compaction operation comprises modifying the predefined ratio depending on a count of free memory blocks that are available in the non-volatile memory.

5. The method according to claim 1, and comprising assigning one or more memory blocks in the non-volatile memory exclusively for expediting the flush command, wherein executing the flush command comprises committing the data buffered in the volatile buffer to the exclusively-assigned memory blocks, and subsequently transferring the committed data from the exclusively-assigned memory blocks to alternative storage locations in the non-volatile memory.

6. A storage system, comprising:
a non-volatile memory;
a volatile buffer for buffering data received for storage in the non-volatile memory; and
a processor configured to receive one or more storage commands and at least one flush command, which instructs the storage device to commit the data buffered in the volatile buffer to the non-volatile memory, to execute the storage commands in accordance with a first storage rule, and to execute the flush command in accordance with a second storage rule having smaller latency relative to the first storage rule.

7. The storage system according to claim 6, wherein the processor is configured to execute the flush command in accordance with the second storage rule by limiting a number of programming operations to be performed in the non-volatile memory per each compaction operation to a predefined ratio, and to execute the storage commands in accordance with the first storage rule by permitting the number to exceed the predefined ratio.

8. The storage system according to claim 7, wherein the processor is configured to execute the storage commands in accordance with the first storage rule by enforcing an alternative ratio, which is larger than the predefined ratio.

9. The storage system according to claim 7, wherein the processor is configured to modify the predefined ratio depending on a count of free memory blocks that are available in the non-volatile memory.

10. The storage system according to claim 6, wherein the processor is configured to assign one or more memory blocks in the non-volatile memory exclusively for expediting the flush command, and to execute the flush command by committing the data buffered in the volatile buffer to the exclusively-assigned memory blocks, and subsequently transferring the committed data from the exclusively-assigned memory blocks to alternative storage locations in the non-volatile memory.

11. A memory controller, comprising:
an interface for communicating with a non-volatile memory; and
a processor, which is configured to buffer data received for storage in the non-volatile memory in a volatile buffer, to receive one or more storage commands and at least one flush command, which instructs the memory controller to commit the data buffered in the volatile buffer to the non-volatile memory, to execute the storage commands in accordance with a first storage rule, and to execute the flush command in accordance with a second storage rule having smaller latency relative to the first storage rule.

12. The memory controller according to claim 11, wherein the processor is configured to execute the flush command in accordance with the second storage rule by limiting a number of programming operations to be performed in the non-volatile memory per each compaction operation to a predefined ratio, and to execute the storage commands in accordance with the first storage rule by permitting the number to exceed the predefined ratio.

13. The memory controller according to claim 12, wherein the processor is configured to modify the predefined ratio depending on a count of free memory blocks that are available in the non-volatile memory.

14. The memory controller according to claim 11, wherein the processor is configured to assign one or more memory blocks in the non-volatile memory exclusively for expediting the flush command, and to execute the flush command by committing the data buffered in the volatile buffer to the exclusively-assigned memory blocks, and subsequently transferring the committed data from the exclusively-assigned memory blocks to alternative storage locations in the non-volatile memory.

15. The memory controller according to claim 14, wherein the processor is configured to store the data in the exclusively-assigned memory blocks using a low-latency storage configuration.
